Europäisches Patentamt

**European Patent Office**

**Office européen des brevets**

(11) Veröffentlichungsnummer: **0 016 417**
**B1**

(12) **EUROPÄISCHE PATENTSCHRIFT**

(45) Veröffentlichungstag der Patentschrift:
**19.10.83**

(21) Anmeldenummer: **80101285.7**

(22) Anmeldetag: **12.03.80**

(51) Int. Cl.³: **G 01 S 13/91,** G 01 S 13/78,
G 01 S 13/48

(54) **Nach dem Sekundärradar-Abfrage-Antwort-Verfahren arbeitendes Flughafen-Überwachungssystem.**

(30) Priorität: **22.03.79 DE 2911313**

(43) Veröffentlichungstag der Anmeldung:
**01.10.80 Patentblatt 80/20**

(45) Bekanntmachung des Hinweises auf die Patenterteilung:
**19.10.83 Patentblatt 83/42**

(84) Benannte Vertragsstaaten:
**BE FR GB IT NL**

(56) Entgegenhaltungen:
**DE-C-1 240 950**
**FR-A-2 211 704**
**US-A-4 060 805**
**US-A-4 137 531**

(73) Patentinhaber: **SIEMENS AKTIENGESELLSCHAFT,
Berlin und München Wittelsbacherplatz 2,
D-8000 München 2 (DE)**

(72) Erfinder: **Vachenauer, Erwin, Dipl.-Ing., Fasanenweg 28,
D-8013 Haar (DE)**
Erfinder: **Wagner, Gerhard, Dipl.-Ing., Am Kramerberg 9,
D-8176 Waakirchen (DE)**
Erfinder: **Müller, Bernd, Dr. Ing., Am Lindenberg 84,
D-8134 Pöcking (DE)**

Nach dem Sekundärradar-Abfrage-Antwort-Verfahren arbeitendes Flughafen-Überwachungssystem

Die Erfindung bezieht sich auf ein nach dem Sekundärradar-Abfrage-Antwort-Verfahren arbeitendes Flughafen-Überwachungssystem zur Ermittlung der Flugfeld-Position und der Kennung von mit Transpondern versehenen Flugzeugen oder dgl. mit zwei in geeignetem Abstand am Flugfeld angeordneten, scharf bündelnden, das Flugfeld abtastenden Antennen, deren Strahlungskeulen so steuerbar sind, daß ihre Überschneidungszone nacheinander jeden Punkt des Flugfeldes erfaßt, wobei von einer der beiden Antennen ein Abfragesignal ausgesendet und von der anderen Antwortsignale der Transponder empfangen werden.

Die Flughäfen werden in Zukunft mit einem neuen Landesystem ausgerüstet, das den Flugverkehr auch bei schlechten Sichtbedingungen ermöglichen soll. Dabei wird das Flughafen-Überwachungspersonal mit dem Problem konfrontiert, bei schlechter Sicht auch für den ordnungsgemäßen Ablauf des Flugfeldverkehrs sorgen zu müssen. Dieses Problem kann nur gelöst werden, wenn eine Einrichtung vorhanden ist, die eine Überwachung des Verkehrsablaufs auf dem Fluggelände unter schlechten Sichtbedingungen ermöglicht. Dies könnte beispielsweise dadurch geschehen, daß auf einem Schirmbild die Positionen der Flugzeuge und ihre Kennungen ständig dargestellt werden.

Einige Großflughäfen sind zur Überwachung des Fluggeländes mit einem hoch auflösenden Primärradar, z. B. mit einer X-Band-Radaranlage, ausgerüstet. Ein solches hoch auflösendes Radar hat jedoch den Nachteil, daß mit kürzer werdender Wellenlänge die Entdeckungswahrscheinlichkeit bei schwerem Regenfall nicht ausreichend ist, und daß außerdem eine Identifizierung der Flugzeuge fehlt.

Zur Flugfeldüberwachung können auch Sensoren, beispielsweise induktive Schleifen, Leitkabel, Radarsensoren, Infrarot- oder Drucksensoren, an den Rollbahnen angebracht werden. Derartige Sensoren überwachen jedoch nur die Rollbahnen und nicht das übrige Gelände und erfordern einen hohen Aufwand an Installationskosten.

Eine weitere Möglichkeit der Flugfeld-Überwachung besteht in der Verwendung von Sekundär-Radar. Mit Sekundärradar ist sowohl eine Ortung als auch eine Identifizierung auf dem gesamten Flughafengelände möglich. Schwierigkeiten ergeben sich jedoch dadurch, daß beim bestehenden Sekundärradar-Überwachungssystem die Antworttelegramme eine verhältnismäßig lange Dauer haben, so daß sich die Antworten der an den Flugzeugen angebrachten Transponder innerhalb des Flugfeldes überlappen.

Ein englisches Flughafenüberwachungssystem (»AGARD Conference Proceedings«, No. 188, Beitrag 21) mit Sekundärradar nützt die Tatsache aus, daß zum Auflösen einer Antwort im Flugzeug-Transponder zwei Impulse ($P_1$, $P_3$) mit einem definierten Abstand notwendig sind. Am Flugfeld werden hierbei zwei Sendestationen postiert, von denen die eine den Impuls $P_1$ über ein Richtstrahldiagramm und die andere den Impuls $P_3$ über ein Rundstrahldiagramm aussendet. An bestimmten Orten des Flugfeldes ist die Zeitbedingung für die Annahme der Abfrage im Transponder erfüllt. Befindet sich an einer solchen Stelle gerade ein Flugzeug, dann gibt dessen Transponder eine Antwort ab. Auf diese Weise läßt sich das Flugfeld so abtasten, daß immer nur ein Transponder antwortet. Über einen am Rande des Flugfeldes postierten Empfänger wird die Antwort decodiert. Die Position des Flugzeugs ist aus der Winkellage des Richtstrahls und den eingestellten Zeitabständen zwischen den beiden Impulsen $P_1$ und $P_3$ zu ermitteln. Bei diesem englischen System kann die Genauigkeit der Ortung durch Anwendung eines Hyperbelverfahrens verbessert werden. Da der Bereich, in welchem die Transponder antworten, jedoch relativ groß ist, kann eine Antwortüberlappung auftreten.

Ein amerikanisches Flughafen-Überwachungssystem (»AGARD Conference Proceedings«, No. 188, Beitrag 22) mit Sekundärradar benützt zur Selektion der einzelnen Flugzeuge die Funktion der Nebenzipfelsignalunterdrükkung auf dem Abfrageweg (ISLS). Ist die Amplitude des Bezugspegelimpulses $P_2$ dabei größer als die Amplitude des ersten Abfrageimpulses $P_1$, dann wird vom Transponder des betreffenden Flugzeuges keine Antwort abgegeben. Zwei Abfragestationen tasten über Monopulsantennen das Flugfeld ab. Nur im Schnittpunkt der beiden Strahlen ist die Amplitude des Impulses $P_2$ kleiner als die Amplitude des Impulses $P_1$, so daß nur von dieser Stelle aus eine Antwort abgegeben werden kann. Die Ortsbestimmung wird mit Hilfe von Empfängern durchgeführt, wobei die Laufzeitunterschiede der empfangenen Signale ausgewertet werden. Durch Reflexionen von Sperrabfragen, bei denen der Pegel des Impulses $P_2$ größer als derjenige des Impulses $P_1$ ist, an Flugzeugen oder Gebäuden können jedoch Bereiche auftreten, in denen keine Lokalisierung eines Flugzeugs möglich ist.

Ähnliche Systeme, die ebenfalls mit einer Selektion der einzelnen Flugzeuge über die ISLS-Funktion arbeiten, sind aus der Zeitschrift »Aviation Week & Space Technology«, 28. Juni 1976, Seiten 67 bis 73, aus der Zeitschrift »Electronics«, 13. Mai 1976, Seite 34 und der deutschen Offenlegungsschrift 2 538 382 bekannt. Auch bei diesen Flughafen-Überwachungssystemen treten Bereiche auf, in denen eine Lokalisierung der Flugzeuge nicht möglich ist.

Aus der Druckschrift FR-A-2 211 704 und der US-Patentschrift 4 060 805 sind ebenfalls mit

Sekundärradar arbeitende Flughafen-Überwachungssysteme bekannt. Es gibt hierbei mehrere zueinander räumlich versetzte Stationen, die sowohl als Abfrage- als auch als Empfangsstation für die Transpondersignale der Flugzeuge arbeiten. Jede dieser Stationen hat eine Antenne, die einen scharf gebündelten Strahl erzeugt. Mit diesen Strahlen läßt sich das Flugfeld abtasten, wobei diese so steuerbar sind, daß ihre Überschneidungszone nacheinander jeden Punkt des Flugfeldes erfaßt. Zur Erzielung einer solchen Überschneidungszone sind stets nur zwei Strahlen erforderlich. In der Suchphase erfragen die Stationen alle Flugzeuge, die sich auf dem Flugfeld befinden, mitsamt deren Kennung und Positionen, die sich aus der jeweiligen Lage der Überschneidungszone der beiden jeweils eingeschalteten Abfragestrahlen ergibt. Die Abfragestrahlen sind zugleich auch die Strahlen, über welche die Antwortsignale eines z. B. in einem Flugzeug befindlichen Transponders empfangen werden. Der Aufwand in einer Station ist somit verhältnismäßig hoch, da diese sowohl mit einer Abfrageeinrichtung, d. h. mit einem Sender, als auch mit einem Empfänger ausgerüstet sein muß.

Aus der US-Patentschrift 4 060 805 ist außer dem Fall, daß beide Stationen sowohl sendende als auch empfangende Abfragestationen sind, anhand der dortigen Fig. 9 noch ein System beschrieben, das aus einem nicht eigens gezeichneten »Illuminations«-Abfragesender und aus zwei räumlich zueinander versetzten, nur empfangenden Peilantennen besteht. Jede Peilantennen-Empfangsstation muß einen Taktgeber aufweisen, der mit den Taktgebern der anderen Stationen synchronisiert ist. Die Lage des antwortenden Transponders kann dann durch Biangulation bestimmt werden, da die Winkelstellungen der beiden empfangenden Peilantennen bekannt sind. Abgesehen davon, daß bei diesem System auch ein ziemlich hoher Aufwand getrieben werden muß, da ein Illuminationssender und zwei Peilempfänger erforderlich sind, ergibt sich noch ein schwerwiegender Nachteil. Da nämlich ein ständig das gesamte Flugfeld erfassender Illuminations-Abfragesender verwendet wird, antworten bei einer Abfrage stets alle mit einem Transponder ausgerüsteten Flugzeuge und Fahrzeuge auf dem Flugfeld. Dies ist jedoch aus Gründen der enormen Funkraumbelastung und einer erhöhten Fehlerwahrscheinlichkeit ungünstig.

Aufgabe der Erfindung ist es, ein Flughafen-Überwachungssystem zu schaffen, welches in jedem Falle eine genaue Lokalisierung der sich auf dem Flugfeld befindlichen Flug- und Fahrzeuge mit Identifizierung ermöglicht, dabei jedoch mit einem kleineren technischen Aufwand und einer verhältnismäßig geringen Funkraumbelastung auskommt. Gemäß der Erfindung, die sich auf ein Flughafen-Überwachungssystem der eingangs genannten Art bezieht, wird diese Aufgabe dadurch gelöst, daß die das Abfragesignal aussendende erste Antenne eine nur sendende Antenne und die zweite Antenne eine nur empfangende Antenne zur Aufnahme der durch das Abfragesignal der ersten Antenne ausgelösten Antwortsignale der Transponder ist.

Bei dem System nach der Erfindung werden die in den Flugzeugen sowieso vorhandenen Sekundärradar-Transponder benützt. Das System besteht somit aus einer Abfragestation, die über eine scharf bündelnde Antenne Abfragesignale aussendet, und aus einer anders lokalisierten Empfangsstation, die über eine schmale Antennenkeule die Transponder-Antworten empfängt. In der Empfangsstation trifft nur dann eine Antwort ein, wenn sich in der Überschneidungszone der Abfrage- und der Empfangskeule ein Flugzeug oder dgl. befindet. Auf diese Weise läßt sich das Flugfeld »punktweise« abtasten, wobei die ausgelösten Antwort-Codes einzeln ermittelt werden. Auch Bodenfahrzeuge, die mit einem Transponder ausgerüstet sind, beispielsweise Tank- oder Löschfahrzeuge, können so erfaßt werden. Die Überschneidungszone der beiden Antennenkeulen gibt die Position des abgefragten Flugzeugs oder Fahrzeugs an. Die Ortsbestimmung ist um so genauer, je schmäler die Antennenkeulen sind.

Aus der deutschen Patentschrift 1 240 950 ist ein Luftverkehrsüberwachungssystem zum Ermitteln der Höhen und Standorte von sich entlang einer Luftstraße bewegenden Flugzeugen bekannt. Hierbei sind am Boden seitlich zur Luftstraße zwei Radargeräte angeordnet, deren Antennendiagramme sich im Bereich der Luftstraße überlappen. Eines der Radargeräte kann dabei nur aus einem auf die Frequenz des anderen Radargerätes abgestimmten Empfänger ohne eigenen Sender bestehen. Mittels Laufzeitmessungen werden dann die Höhe und der Standort der Flugzeuge ermittelt. Abgesehen davon, daß zumindest eine der beiden Radarstationen sowohl einen Sender und einen Empfänger aufweist, besteht ein wesentlicher Unterschied zum erfindungsgemäßen Flughafen-Überwachungssystem darin, daß keine systematische Strahlungskeulenabtastung eines Gebiets und auch keine Verwendung von Sekundärradar vorgesehen ist.

Das Flughafen-Überwachungssystem nach der Erfindung ist insbesondere eine vorteilhafte Ergänzung zu einem System, bei dem die von den Antwortstationen ausgehenden Antwortsignale über zwei oder mehr am Flugfeld geeignet verteilte und räumlich von der Abfrageantenne abgesetzte Rundstrahlantennen empfangen werden und bei dem aus den Laufzeitunterschieden des Antwortsignals zu den einzelnen Rundstrahlantennen die Position des jeweiligen Flugzeugs oder dgl. mit Hilfe des bekannten sogenannten Hyperbelortungsverfahrens errechnet wird. Hierbei könnten nämlich bezüglich der Abfragestation mehrere hintereinander liegende Flugzeuge antworten und somit Mehrfachantworten auftreten.

Die Erfindung wird im folgenden anhand eines in zwei Figuren dargestellten Ausführungsbeispiels näher erläutert, wobei das System nach der Erfindung als Ergänzungssystem zum vorstehend erwähnten nach dem Hyperbelortungsverfahren arbeitenden Flughafenüberwachungssystem beschrieben ist. Es zeigt

Fig. 1 das Schema eines Flughafen-Überwachungssystems mit vier Empfängern, von denen nur einer eine gemäß der Erfindung scharf bündelnde Antenne aufweist, und

Fig. 2 das Blockschaltbild eines Moduls einer phasengesteuerten Empfangsantenne zur Erzeugung der scharf gebündelten Empfangskeule des Systems von Fig. 1.

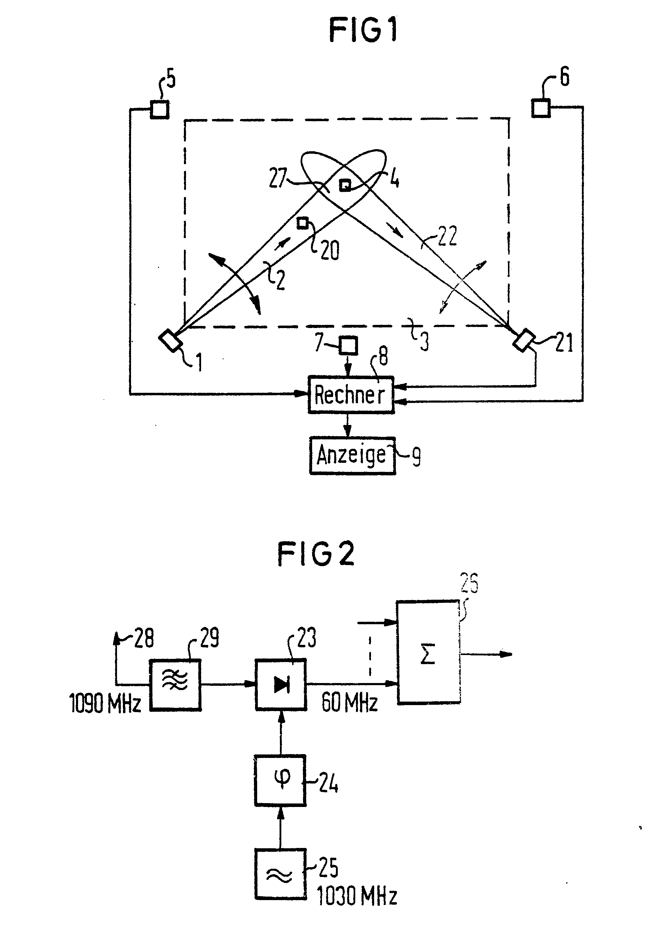

Bei dem in Fig. 1 schematisch dargestellten Flughafen-Überwachungssystem wird zur Abfrageauslösung in einer Abfragestation 1 eine scharf bündelnde Antenne benützt, deren Strahlbreite in der Größenordnung von ca. 2° liegt. Der Abfragestrahl 2 tastet das Flugfeld 3 ab und löst immer dann eine Antwort in einem Transponder aus, wenn sich ein mit einem solchen Transponder ausgerüstetes Flugzeug 4 in der jeweiligen Strahlrichtung befindet. Die Antwort des Flugzeugs 4 gelangt in drei am Flugfeldrand aufgestellte Empfänger 5, 6 und 7. Aus den Laufzeitunterschieden des Antwortsignals bis zu den Empfängern 5, 6 und 7 läßt sich die Position des Flugzeugs 4 mittels eines Rechners 8 ermitteln. Der geometrische Ort konstanter Laufzeitdifferenz ist eine Hyperbel. Aus dem Schnittpunkt dreier Hyperbeläste ergibt sich die Lage der Signalquelle. Aus dem Antwortcode des Transponders wird die Kennziffer des Flugzeugs 4 ermittelt (Aktiv-Decoder). Diese Ziffer muß dem Flugzeug 4 vorher zugeordnet werden, was jedoch lediglich ein Organisationsproblem darstellt. Die Position und die Kennziffer des jeweiligen Flugzeugs 4 werden in einem Anzeigefeld 9 dargestellt. Durch die Schwenkung des Abfragestrahls werden der Reihe nach alle Flugzeuge auf dem Flugfeld 3 erfaßt und dargestellt.

Eine gewisse Problematik dieser Anordnung liegt darin, daß der Abfragestrahl 2 auch mehrere Flugzeuge erfassen und deren Transponder abfragen kann, so daß die Antworten wegen der kleinen Flugzeugabstände ineinanderfallen. Wenn dabei eine synchrone Überlappung vorliegt, d. h. die Zeitraster der einzelnen Codes zur Deckung kommen, treten Fehlinformationen auf. Um diesen Fall möglichst auszuschließen, sind zwar bestimmte Abhilfemaßnahmen auf der Abfrageseite möglich, die im folgenden kurz geschildert werden, jedoch nicht in jedem Fall Abhilfe schaffen. Eine dieser Maßnahmen bezieht sich auf die Abfrageantenne. Je stärker nämlich die Bündelung der Abfrageantenne ist, um so geringer ist die Wahrscheinlichkeit, daß mehrere Transponder gleichzeitig antworten. Zur Realisierung extrem schmaler Abfragestrahlen 2 sind Antennen einer großen Apertur erforderlich. In zweckmäßiger Weise wird hierfür das Prinzip der elektronisch phasengesteuerten Antennen angewendet. Es hat den Vorteil, daß die mechanische Schwenkung der Antenne entfällt.

In zweckmäßiger Weise wird noch ein Verfahren zur Nebenzipfelsignalunterdrückung auf dem Abfrageweg angewendet. Hierbei werden die P1, P3-Abfrageimpulse über die Richtantenne der Abfragestation 1 und der P2-Bezugspegelimpuls über eine Rundstrahlantenne ausgesendet. Eine Strahlschärfung erreicht man durch entsprechenden Aufwand in der Richtantenne (große Apertur). Durch die Strahlschärfung wird erreicht, daß azimutal benachbarte Flugzeuge einzeln abgefragt werden können.

Tritt jedoch der Fall auf, daß Flugzeuge in radialer Richtung in bezug zur Abfragestation hintereinander liegen, so können bei der Verwendung der Empfänger 5, 6 und 7 ohne besondere Antennenstrahlbündelung auf eine Abfrage mehrere Flugzeuge antworten. Der Empfang derartiger Mehrfachabfragen wird nach der Erfindung dadurch vermieden, daß nicht nur zum Senden der Abfragen, sondern auch zum Empfang der Antworten eine scharf bündelnde Antenne benutzt wird. Der von der Abfragestation 1 ausgehende Abfragestrahl 2 tastet das Flugfeld in Schritten von beispielsweise 1° ab. Zeigt der Abfragestrahl 2 in eine Richtung, in der sich zwei Flugzeuge 4 und 20 befinden, so daß in den Empfängern 5, 6 und 7 nicht decodierbare, verschachtelte Antworten ankommen, dann wird ein weiterer Empfänger 21 aktiviert. Die scharf gebündelte Strahlungskeule 22 dieses Empfängers 21 tastet nun den Bereich des Abfragestrahls 2 kontinuierlich ab und erfaßt zuerst das Flugzeug 4 und später das Flugzeug 20. Im Empfänger 21 liegen dann die getrennten Code-Informationen des Flugzeugs 4 und des Flugzeugs 20 vor. Die Ortskoordinaten können in diesem Fall aus der momentanen Lage der Überschneidungszone 27 der beiden Antennenkeulen 2 und 22 gewonnen werden. Die Berechnung der Flugzeug-Ortskoordinaten erfolgt im Rechner 8. Die Lage der einzelnen Flug- und Fahrzeuge auf dem Flugfeld läßt sich dann mit der jeweiligen Kennung auf einer Anzeigeeinrichtung 9 darstellen.

Fig. 2 zeigt, wie ein Empfangsmodul einer phasengesteuerten Antenne des Empfängers 21 nach Fig. 1 in zweckmäßiger Weise ausgeführt werden kann. Über ein Bandfilter 29 gelangt das von einem Dipolelement 28 ausgehende Signal (1090 MHz) an einen Mischer 23, in dem eine Umsetzung auf beispielsweise 60 MHz erfolgt. Zur Phasensteuerung dient ein steuerbarer Phasenschieber 24, der zwischen einem Steuersender 25 und dem Mischer 23 angeordnet ist. Mit dieser Steuerung wird die Schwenkung der Empfangskeule durchgeführt. Die 60-MHz-Signale der einzelnen Empfangselemente werden einem Summierglied 26 zugeführt. Da die Signale der Hauptstrahlrichtung in Phase sind, ergeben sie das größte Summensignal. Auf diese Weise wird die Richtwirkung erzielt.

Da die Empfangscharakteristik einer solchen Antenne auch mit Nebenzipfeln behaftet ist, wird in zweckmäßiger Weise das bekannte Verfahren zur Nebenzipfelsignalunterdrückung auf dem Antwortweg (RSLS) angewendet. Aus Aufwandgründen ist es vorteilhaft, ein Verfahren zur Strahlschärfung zu benutzen (Monopuls).

Die beiden Antennenkeulen 2 und 22 nach Fig. 1 werden so gesteuert, daß jeder Punkt des Flugfelds 3 abgetastet wird. Befindet sich in der Überschneidungszone 27 der beiden Diagramme ein Flugzeug 4, dann wird die Antwort des diesem Flugzeug 4 zugeordneten Transponders vom Empfänger 21 aufgenommen und decodiert. Außerdem liegt durch die Lagekenntnis der Überschneidungszone 27 der beiden Diagramme 2 und 22 der Ort des Flugzeugs 4 fest. Die Genauigkeit der Ortsbestimmung ist bei dieser Methode zwar nicht ganz so hoch wie bei der Auswertung der Laufzeitunterschiede mittels der Empfänger 5, 6 und 7, eine Kombination dieser beiden Methoden stellt jedoch eine optimale Lösung dar.

**Patentansprüche**

1. Nach dem Sekundärradar-Abfrage-Antwort-Verfahren arbeitendes Flughafen-Überwachungssystem zur Ermittlung der Flugfeld-Position und der Kennung von mit Transpondern versehenen Flugzeugen (4, 20) oder dgl. mit zwei in geeignetem Abstand am Flugfeld (3) angeordneten, scharf bündelnden, das Flugfeld abtastenden Antennen (1, 21), deren Strahlungskeulen (2, 22) so steuerbar sind, daß ihre Überschneidungszone (27) nacheinander jeden Punkt des Flugfeldes (3) erfaßt, wobei von einer (1) der beiden Antennen ein Abfragesignal ausgesendet und von der anderen (21) Antwortsignale der Transponder empfangen werden, dadurch gekennzeichnet, daß die das Abfragesignal aussendende erste Antenne (1) eine nur sendende Antenne und die zweite Antenne (21) eine nur empfangende Antenne zur Aufnahme der durch das Abfragesignal der ersten Antenne ausgelösten Antwortsignale der Transponder ist.

2. Flughafen-Überwachungssystem nach Anspruch 1, dadurch gekennzeichnet, daß die Antennen (1, 2) als elektronisch phasengesteuerte Antennen ausgebildet sind.

3. Flughafen-Überwachungssystem nach Anspruch 1 oder 2, dadurch gekennzeichnet, daß Maßnahmen zur Nebenzipfelsignalunterdrükkung auf dem Abfrageweg vorgesehen sind.

**Claims**

1. An airport monitoring system operating in accordance with the secondary radar interrogation reply process and which serves to determine the airfield position and identify aeroplanes (4, 20) or the like provided with transponders, using two sharply focussing antennae (1, 21) arranged at the airfield (3) with a suitable spacing to scan the airfield and having radiation lobes (2, 22) so controllable that their overlapping zone (27) consecutively detects each point of the airfield (3), an interrogation signal being transmitted by one (1) of the two antennae and reply signals of the transponders received by the other one (21), characterised in that the first antenna (1) transmitting the interrogation signal is solely a transmitting antenna and the second antenna (2) is solely a receiving antenna for the reception of the reply signals of the transponders which are triggered by the interrogation signal of the first antenna.

2. An airport monitoring system as claimed in Claim 1, characterised in that the antennae (1, 2) are designed as electronically phase-controlled antennae.

3. An airport monitoring system as claimed in Claim 1 or 2, characterised in that measures are provided for side lobe signal suppression on the interrogation path.

**Revendications**

1. Dispositif de surveillance d'aéroport fonctionnant suivant le procédé d'interrogation-réponse du radar secondaire pour déterminer la position du terrain d'atterrissage et identifier des avions (4, 20) munis de transpondeurs ou des véhicules semblables, comportant deux antennes (1, 21) qui sont disposées à une distance appropriée sur le terrain d'atterrissage (3), focalisent finement et explorent le terrain d'atterrissage, et dont les lobes de rayonnement (2, 22) peuvent être commandés de manière que leur zone d'intersection (27) couvre successivement chaque point du terrain d'atterrissage (3), un signal d'interrogation étant émis par une (1) des deux antennes et des signaux de réponse des transpondeurs étant reçus par l'autre (21), caractérisé par le fait que la première antenne (1) émettant le signal d'interrogation est une antenne uniquement émettrice, et la seconde antenne (21) est une antenne uniquement réceptrice pour la réception des signaux de réponse des transpondeurs déclenchés par le signal d'interrogation de la première antenne.

2. Système de surveillance d'aéroport suivant la revendication 1, caractérisé par le fait que les antennes (1, 2) se présentent sous la forme d'antennes commandées électroniquement en phase.

3. Système de surveillance d'aéroport suivant la revendication 1 ou 2, caractérisé par le fait que des mesures sont prévues pour la suppression des signaux de lobes intermédiaires sur le trajet d'interrogation.

## FIG 1

## FIG 2